Europäisches Patentamt

European Patent Office

Office européen des brevets

(11) Numéro de publication: **0 411 988 A1**

# (12) DEMANDE DE BREVET EUROPEEN

(21) Numéro de dépôt: 90402119.3

(22) Date de dépôt: 24.07.90

(51) Int. Cl.⁵: **B60R 9/045**, B60R 9/058

(30) Priorité: 01.08.89 FR 8910849

(43) Date de publication de la demande:
06.02.91 Bulletin 91/06

(84) Etats contractants désignés:
DE GB IT

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Michel,Louis**
**7 Boulevard de Provence**
**F-91200 Athis-Mons(FR)**
Inventeur: **Quinet,Jean-Claude**
**2 rue de Chateaubourg**
**F-91370 Verrières-Le-Buisson(FR)**

(74) Mandataire: **Boivin, Claude**
**9, rue Edouard-Charton**
**F-78000 Versailles(FR)**

(54) **Galerie de toit de véhicule automobile.**

㊗ Galerie de toit de véhicule automobile comprenant des barres longitudinales (11) qui sont portées
par des supports (11 a ) montés pivotants autour
d'un axe longitudinal et sur lesquelles peuvent être
fixées des barres transversales (16).

Chacun des bords longitudinaux ou brancards
du pavillon (1) se raccorde au côté d'habitacle (2)
par un enjoliveur de finition (4) qui est conformé de
manière que les barres longitudinales (11) et leurs
supports (11 a ), en position rabattue des barres, y
pénètrent et s'y intègrent en épousant sa forme

FIG.2

On connaît des galeries porte-bagages de toit de véhicules automobiles comportant des barres longitudinales sur lesquelles peuvent être fixées des barres transversales. Dans les galeries de toit de ce genre jusqu'à présent réalisées, les barres longitudinales sont fixées à demeure sur le pavillon du véhicule, mais une telle galerie est souvent inesthétique et nuit à l'aérodynamisme donc à la consommation du carburant.

Le document DE-A- 3 719 974 décrit une galerie de toit dont les barres longitudinales sont portés par des supports montés pivotants autour d'un axe horizontal. Les barres longitudinales et leurs supports peuvent ainsi être rabattus dans des rainures prévues dans le pavillon. Mais ces rainures sont inesthétiques et nuisent à l'aérodynamisme.

La présente invention a pour objet une galerie de toit de véhicule automobile qui remédie à ces inconvénients.

Cette galerie est caractérisée en ce que chacun des bords longitudinaux ou brancards du pavillon se raccorde au côté d'habitacle par un enjoliveur de finition qui est conformé de manière que les barres longitudinales et leurs supports, en position rabattue des barres, y pénètrent et s'y intègrent en épousant sa forme.

On a décrit ci-après, à titre d'exemple non limitatif, un mode de réalisation de la galerie selon l'invention, avec référence aux dessins annexés dans lesquels :

La Figure 1 est une vue en perspective d'un pavillon de véhicule automobile montrant les barres longitudinales de la galerie en position de repos;

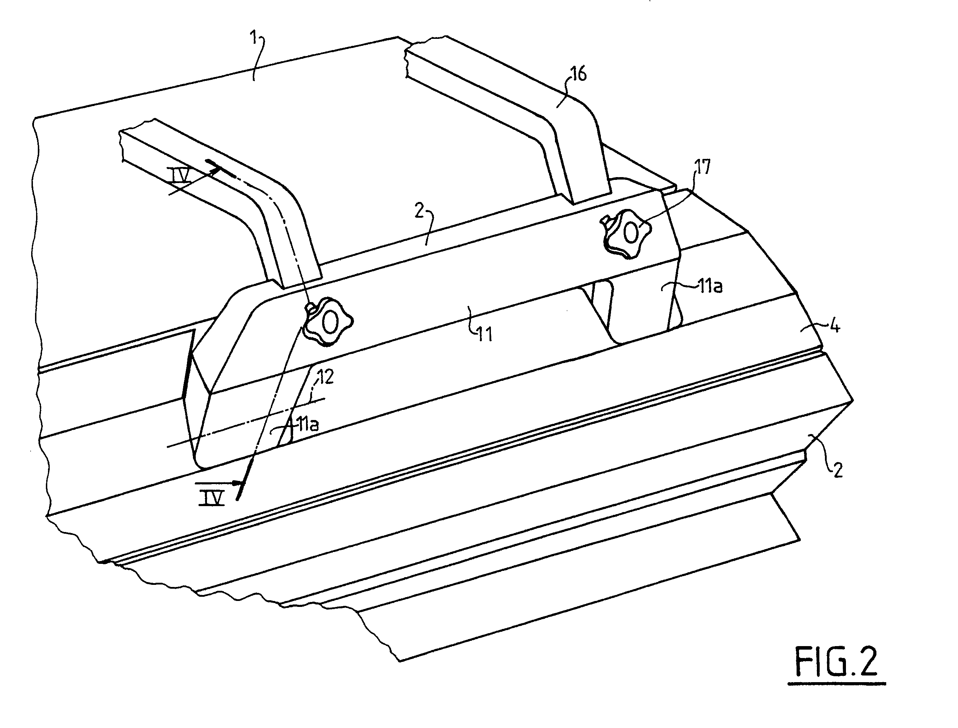

La Figure 2 est une vue semblable à la Figure 1, la galerie étant montée;

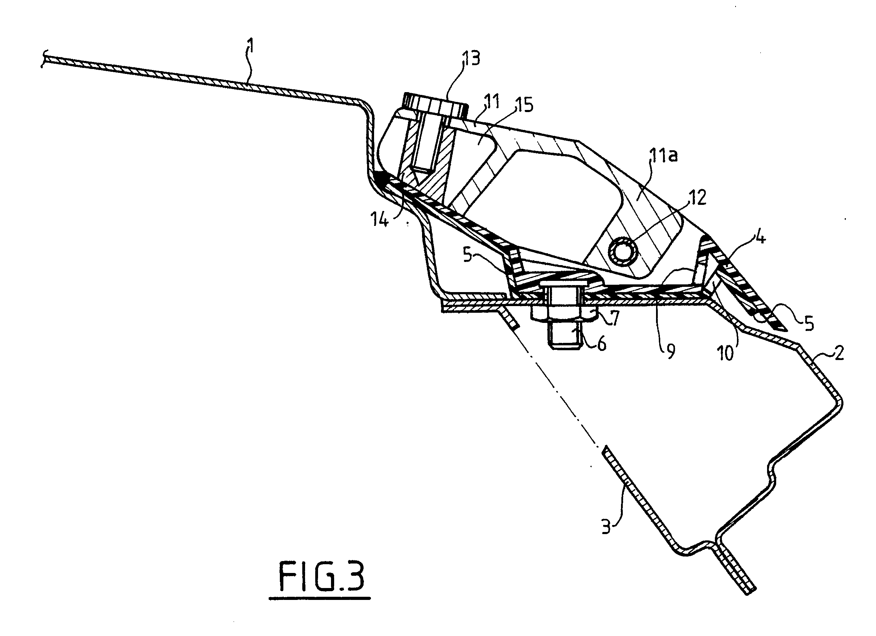

La Figure 3 est une vue en coupe transversale suivant III-III de la Figure 1;

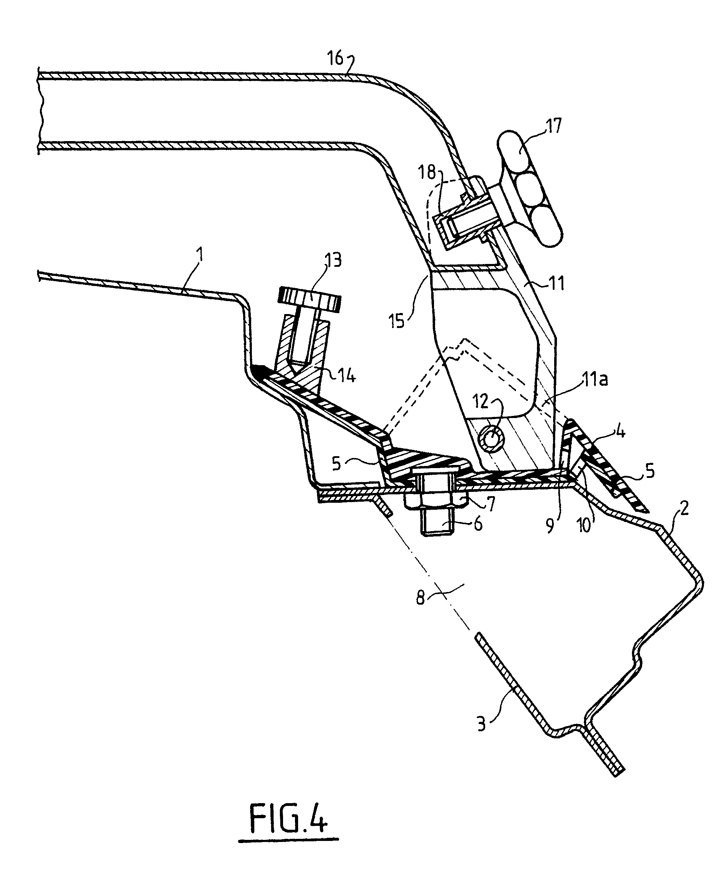

La Figure 4 est une vue semblable à la Figure 3 suivant IV-IV de la Figure 2, la galerie étant montée;

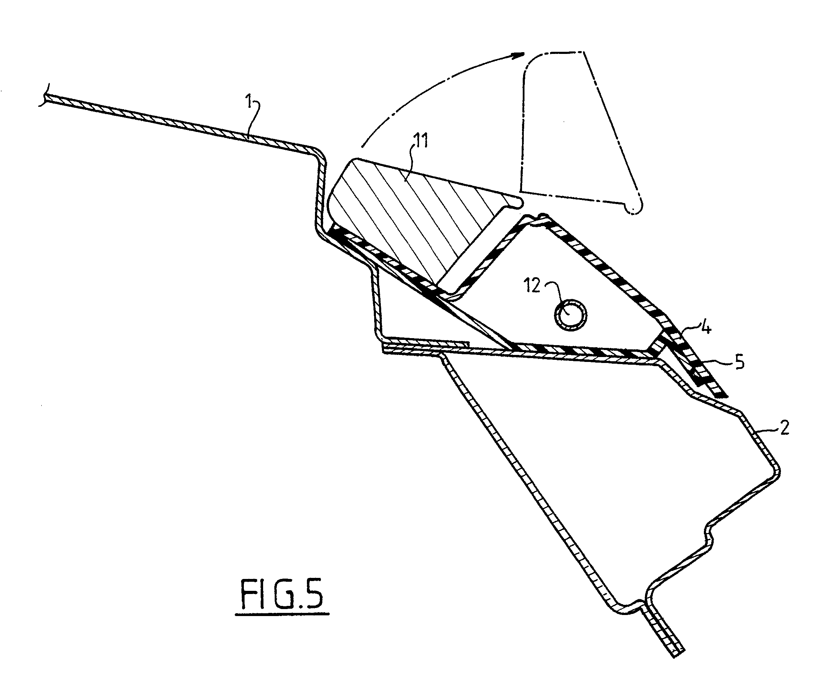

La Figure 5 est une vue en coupe transversale suivant V-V de la Figure 1.

Au dessin, ont voit le pavillon 1 d'un véhicule automobile dont chacun des bords longitudinaux ou brancards est fixé au côté d'habitacle 2 et à sa doublure 3. Un enjoliveur plastique 4 servant de finition au brancard du pavillon 1 est collé sur une doublure plastique 5, elle-même collée sur le pavillon 1 et sur le côté d'habitacle 2; la face extérieure de cet enjoliveur se raccorde à celle du pavillon 1 et à celle du côté d'habitacle 2. L'assemblage est renforcé par des vis 6 dont la tête est insérée dans l'enjoliveur 4 et qui traverse le côté d'habitacle, celui-ci étant serré par un écrou 7. Un trou 8 percé dans la doublure 3 facilite l'accès à la vis 6. Des trous d'évacuation d'eau 9 et 10 sont prévus dans le fond des enjoliveurs plastiques 4 et 5.

Deux barres longitudinales 11 de galerie sont prolongées à chacune de leurs extrémités par une partie de support 11 a sensiblement à 90° par rapport à l'axe longitudinal de la barre; ces parties de support sont montées pivotantes autour d'un axe horizontal 12 porté par l'enjoliveur 4.

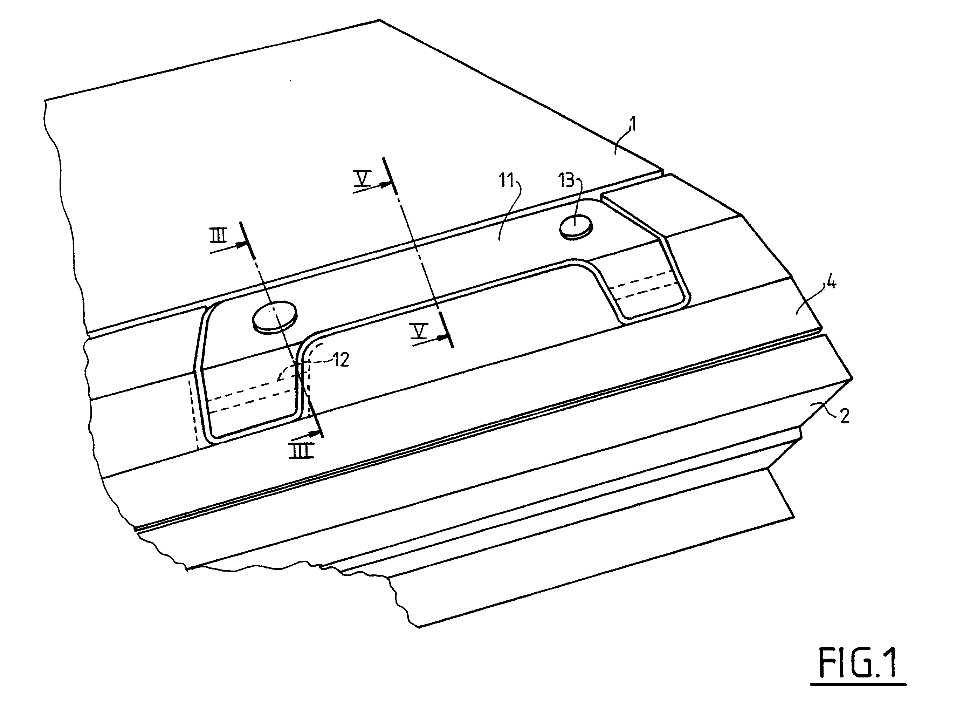

La barre 11 peut être fixée par des vis moletées 13 sur des canons de fixation 14 solidaires de l'enjoliveur du brancard 4. Dans cette position, la barre transversale 11 et ses parties de support 11 a sont intégrées dans l'enjoliveur 4 en épousant sa forme et s'y raccordant, comme on peut le voir à la Figure 1. Elles forment ainsi avec l'enjoliveur une surface lisse et continue favorisant l'aérodynamisme.

La barre 11 présente des logements 15 dans chacun desquels peut être engagée l'extrémité d'une barre transversale de galerie 16. Cette dernière est fixée à la barre longitudinale par une poignée à vis 17 qui vient se visser dans un insert 18 de la barre transversale.

Au repos, les barres longitudinales de la galerie sont rabattues dans l'enjoliveur 4 et fixées à celui-ci par les vis moletées 13. Quand on désire utiliser la galerie, on libère les barres 11, on les fait pivoter vers le haut, on engage les extrémités des barres transversales 16 dans les logements 15, et on fixe ces barres transversales aux barres longitudinales à l'aide de poignées à vis 17. On remarquera alors que les poignées à vis 17 prennent de façon avantageuse la place des vis 13.

## Revendications

1. Galerie de toit de véhicule automobile comprenant des barres longitudinales (11) qui sont portées par des supports (11 a ) montés pivotants autour d'un axe longitudinal et sur lesquelles peuvent être fixées des barres transversales (16),
caractérisée en ce que chacun des bords longitudinaux ou brancards du pavillon (1) se raccorde au côté d'habitacle (2) par un enjoliveur de finition (4) qui est conformé de manière que les barres longitudinales (11) et leurs supports (11 a ), en position rabattue des barres, y pénétrent et s'y intègrent en épousant sa forme.

2. Galerie de toit selon la revendication 1,
caractérisée en ce que les supports (11 a ) constituent des prolongements des extrémités des barres longitudinales.

3. Galerie de toit selon la revendication 1 ou 2,
caractérisée par des moyens (13) pour fixer les barres longitudinales (11) en position rabattue.

4. Galerie de toit selon l'une quelconque des revendications 1 à 3,
caractérisée en ce que chaque barre longitudinale (11) présente des logements (15) dans chacun desquels peut être engagée l'extrémité d'une barre transversale de galerie (16).

5. Galerie de toit selon la revendication 3, caractérisée en ce que les moyens (13) sont constitués par des vis qui prennent la place des poignées à vis (17) de fixation de la galerie sur les barres longitudinales (11).

FIG.1

FIG.2

EP 0 411 988 A1

FIG.3

**FIG.4**

FIG.5

**Office européen des brevets**

# RAPPORT DE RECHERCHE EUROPEENNE

Numéro de la demande

## EP 90 40 2119

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 719 974 (VOLKSWAGEN) <br> * figure 1 * * colonne 2, ligne 1 - colonne 3, ligne 11 <br> @ colonne 3, lignes 53 - 63 * <br> — — — | 1-4 | B 60 R 9/045 <br> B 60 R 9/058 |
| Y | DE-A-3 743 941 (BAYERISCHE MOTOREN WERKE) <br> * revendications 1-5; figures 1-5 * <br> — — — — — | 1-4 | |

**DOMAINES TECHNIQUES RECHERCHES (Int. Cl.5)**

B 60 R

Le présent rapport de recherche a été établi pour toutes les revendications

| Lieu de la recherche | Date d'achèvement de la recherche | Examinateur |
|---|---|---|
| La Haye | 08 novembre 90 | D'SYLVA C.H.A. |